# EUROPEAN PATENT APPLICATION

(11) **EP 1 300 745 A1**
(43) Date of publication of application: **09.04.2003**
(21) Application number: 00944329.2
(22) Date of filing: 07.07.2000
(51) Int. Cl.: G06F 1/00, G06F 15/00

(54) **PASSWORD CHANGING METHOD, COMPUTER SYSTEM, AND COMPUTER-READABLE RECORDED MEDIUM ON WHICH PROGRAM IS STORED**

(71) Applicant: FUJITSU LIMITED, Kawasaki-shi, Kanagawa 211-8588 (JP)
(72) Inventor: KONDO, Hisaki, c/o Fujitsu Limited, Kawasaki-shi, Kanagawa 211-8588 (JP)
(74) Representative: Williams, Michael Ian
(86) International application number: JP0004542
(87) International publication number: WO02005073

(57) **Abstract**

A computer system having an electronic equipment having a password lock function of inhibiting execution of a process until a registration password is inputted. The computer system comprises an input unit (10) for inputting an update password to take the place of a registration password in a state in which an environment setting process executed with a startup of the computer system has been completed, an update password storing unit (20) for storing therein the update password, and a setting unit (40) for setting the update password stored in the update password storing unit (20) as a new registration password in the environment setting process executed with a start up of the computer system after the update password has been stored. Changing or setting of a password by a computer virus or the like can be prevented, and the operator can change a password with a GUI that the operator is accustomed to using when changing a password of an electronic equipment.

## Description

### Technical Field

The present invention relates to a method of changing a password in an electronic device such as a hard disk device or the like having a password lock function of inhibiting execution of a process until the password is inputted. The present invention also relates to a computer system to which the method is applied, and a computer readable record medium in which a program for accomplishing the method is stored.

### Background of Invention

In computer systems such as personal computers, some of hard disk devices used as storages have a password lock function of limiting an access to data on the hard disk device using a password, thereby protecting the data on the hard disk device from an unauthorized access.

In concrete, when a BIOS (Basic Input/Output System) performs environment setting of a personal computer system in a startup of the computer system, the operator inputs the same password as a password (hereinafter, a password, which has been set, being referred as a registration password) having been set to a hard disk device through a keyboard or the like. The inputted password is transmitted along with a password release command to the hard disk, the password is collated in the hard disk device, and the password lock status of the hard disk device is released.

The BIOS inhibits an access to the hard disk device until a password matching with an update password is inputted.

As a method of changing a password having been set to the hard disk, there is known a method of directly changing a registration password having been set to the hard disk using an application program operating on the OS (Operation System). When the computer is restarted after the registration password has been changed by the application program, the BIOS refers to the updated registration password (hereinafter referred as an update password), which is set to the hard disk, when carrying out the environment setting process, and inhibits an access to the hard disk device until a password matching with the update password.

In such the known password changing method, a registration password set in the hard disk can be, directly changed from an application operating on the OS. For this, there is a possibility that a registration password set to the hard disk is changed, or a password is set to the hard disk, in which no password is set, by an unauthorized access by a computer virus operating on an OS, for example. As a result, the hard disk device becomes unusable.

Aimed to prevent an unauthorized access to password information in the hard disk device by such a computer virus or the like, there is also a known hard disk device which can set an operation mode (hereinafter referred as a security freeze status) of enabling a change of the password only when the BIOS carries out the environment setting process in a startup of the personal computer, and, after completion of the environment setting process by the BIOS, inhibiting a process of, changing the password relating to the hard disk device after the OS has been started.

For changing the password in a hard disk device set to such the security freeze status, resetting or switching-on of the power supply is first performed to restart the computer system. The BIOS then performs a startup process (environment setting process) to initialize a system controller, a DRAM, each device, etc. in the computer system.

If a password has been set in the hard disk device in the course of the environment setting process by the BIOS, the operator inputs a password matching with the registration password through a keyboard or the like to release the password lock status.

If the operator does not release the password lock status, an access to data recorded on the hard disk device or a change of the registration password is inhibited until the operator inputs a password matching with the registration password, and releases the password lock status.

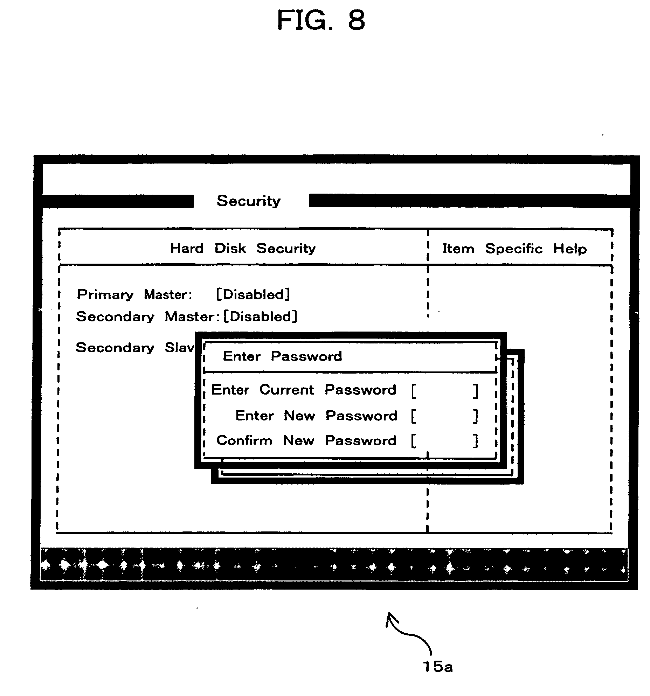

FIG. 8 is a diagram showing an image of a pop-up screen displayed on a display screen when a password is changed in the computer system. When a registration password is changed, an update password is inputted together with a registration password having been set according to an instruction in the pop-up screen displayed on a display screen 15a as shown in FIG. 8 to change the password.

Further, the BIOS sets the hard disk device to the security freeze status, then starts the OS. After that, the registration password recorded on the hard disk device cannot be changed, set, deleted, etc., unless the computer system is restarted and the BIOS is started.

Meanwhile, when the power supply is again switched on after the power supply has been switched off still in the power lock status, the computer system is again brought into the password lock status.

Accordingly, in the above known computer system, a change of the password of the hard disk device by the operator is allowed only in the course of the environment setting process by the BIOS. A change of the password of the hard disk device is inhibited by the security freeze status after the OS has been started. It is thereby possible to prevent an unauthorized process such as changing, setting, releasing, etc. of the password of the hard disk device by a computer virus or the like.

In such the known computer system, the hard disk device is set in the security freeze status by the BIOS with the operating system started, so that the password cannot be directly changed on the operating system. Thus, it becomes necessary to restart the computer system, and change the password in the course of the environment setting process by the BIOS with a restart of the computer system. The user interface of the BIOS is different from one that the operator is accustomed to such as a GUI (Graphical User Interface) of general applications operating on the OS, so that the operation of it is troublesome to the user.

If the BIOS does not set the security freeze status when the computer system is started, it is possible to directly change the password through an application program or the like operating on the OS. In such case, there is a possibility that the password is changed or altered by an unauthorized access of a virus or the like, which degrades the security level.

In the light of the above problem, an object of the present invention is to provide a password changing method and computer system, and a computer readable record medium in which a program is stored, thereby to prevent a password from being changed or set by a computer virus etc., and to allow the password to be changed in an environment of use such as a GUI or the like that the operator is accustomed to.

### Disclosure of Invention

In order to accomplish the above object, the present invention provides a password changing method for changing a registration password in a computer system using an electronic equipment having a password lock function of inhibiting execution of a process until the registration password is inputted, comprising the steps of an inputting step of inputting an update password to take the place of the registration password in a state in which an environment setting process executed with a startup of the computer system has been completed, a storing step of storing the update password in a storing unit, and a setting step of setting the update password stored in the storing unit as a new registration password in the environment setting process executed with a startup of the computer system after the update password has been stored.

The setting step may comprise a step of releasing a password lock status of the electronic equipment using the registration password before updated, and a step of changing the registration password to the update password stored in the storing unit after the password lock status of the electronic equipment has been released. The electronic equipment may be a storage.

The present invention further provides a computer system using an electronic equipment having a password lock function of inhibiting execution of a process until a registration password is inputted, comprising an input unit for inputting an update password to take the place of the registration password in a state in which an environment setting process executed with a startup of the computer system has been completed, an update password storing unit for storing the update password therein, and a setting unit for setting the update password stored in the update password storing unit as a new registration password in the environment setting process executed with a startup of the computer system after the update password has been stored.

The computer system may further comprise a registration password storing unit for storing therein the registration password, and the setting unit may comprise a password lock releasing unit for releasing a password lock status of the electronic equipment using the registration password before changed, and a password changing unit for changing the registration password stored in the registration password storing unit to the update password stored in the update password storing unit after release by the password lock releasing unit has been completed.

The electronic equipment may be a storage. Further, the update password storing unit may be configured with a non-volatile storage.

The present invention still further provides a computer readable record medium storing therein a program for making a computer execute a process of changing a registration password in a computer system using an electronic equipment having a password lock function of inhibiting execution of a process until the registration password is inputted, the program storing an update password, inputted in a state in which an environment setting process executed with a startup of the computer system has been completed, to take the place of the registration password in a storing unit, and setting the update password stored in the storing unit as a new registration password in the environment setting process executed with a startup of the computer system after the update password has been stored.

The program may release a password lock status of the electronic equipment using the registration password before changed when setting the update password as the new registration password, after that, changing said registration password to the update password stored in the storing unit.

The present invention still further provides a computer readable record medium storing therein a program for making a computer execute an environment setting process when a computer system using an electronic equipment having a password lock function of inhibiting execution of process until a registration password is inputted is started, the program determining whether an update password to take the place of the registration password is stored in a storing unit or not when the environment setting process is executed with a startup of the computer system, and setting the update password as a new registration password when it is determined that the update password is stored in the storing unit.

The program may release a password lock status of the electronic equipment using the registration password before changed when setting the update password as the new registration password, after that, changes the registration password to the update password stored in the storing unit.

The program may be a BIOS (basic input/output system).

The password changing method and computer system, and the computer readable record medium storing a program therein according to this invention provide the following effects and advantages:
(1) An update password can be inputted in a state in which an environment setting process executed with a startup of a computer has been completed when a password of an electronic equipment such as a storage or the like is changed. Accordingly, it is possible to change a password in a using environment such as a GUI (Graphical User Interface) that the operator is accustomed to. Since an update password is set as a new password in the environment setting process executed with a restart of the computer system, so that it is possible to prevent the password from being changed or set by a computer virus or the like.
(2) It is possible to certainly change a password.

### Brief Description of Drawings

FIG. 1 is a functional block diagram of a computer system according to an embodiment of this invention;
FIG. 2 is a block diagram showing a whole structure of the computer system according to the embodiment of this invention;
FIG. 3 is a diagram schematically showing a structure of a CMOS RAM in the computer system according to this invention;
FIG. 4 is a flowchart for illustrating a process by a BIOS performed when the computer system is started according to the embodiment of this invention;
FIG. 5 is a flowchart for illustrating a process by the BIOS performed when the computer system is restarted according to the embodiment of this invention;
FIG. 6 is a flowchart for illustrating a controlling steps by the BIOS and a password updating program performed when a registration password in a hard disk is changed in the computer system according to the embodiment of this invention;
FIG. 7 is a diagram of an image of a pop-up screen displayed on a display screen when a registration password is changed in the computer system according to the embodiment of this invention; and
FIG. 8 is a diagram of an image of a pop-up screen displayed on a display screen when a password is changed in a computer system.

### Best Mode for Carrying Out the Invention

Hereinafter, an embodiment of the present invention will be described, with reference to the drawings.

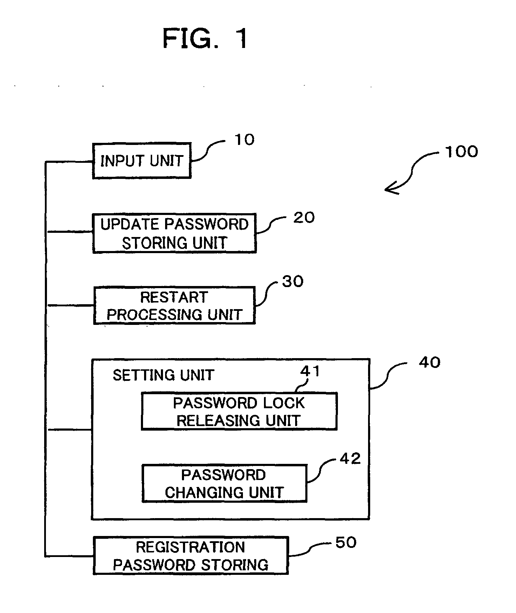

FIG. 1 is a block diagram showing functions of a computer system according to an embodiment of this invention. As shown in FIG. 1, a computer system of this invention is a computer system 100 having an electronic equipment (a storage, for example) having a password lock function of inhibiting execution of a process until a registration password is inputted. The computer system 100 comprises an input unit 10, an update password storing unit 20, a restart processing unit 30, a setting unit 40 and a registration password storing unit 50.

An Operator inputs an update password from the input unit 10 to take the place of a registration password in a state in which the environment setting process executed with a startup of the computer system has been completed.

The update password storing unit 20 is a non-volatile storage storing an update password therein. The restart processing unit 30 restarts the computer system after the update password has been stored. The registration password storing unit 50 is a non-volatile storage storing the registration password therein.

The setting unit 40 sets an update password stored in the update password storing unit 20 as a new registration password in the environment setting process executed with a startup of the computer system.

The setting unit 40 comprises a password lock releasing unit 41 and a password changing unit 42. The password lock releasing unit 41 releases the password lock status of the electronic equipment using a registration password before changed. The password changing unit 42 changes (replaces) a registration password stored in the registration password storing unit 50 to (with) an update password stored in the update password storing unit 20 after release by the password lock releasing unit 41 has been completed.

Next, a practical embodiment of the computer system according to the embodiment of this invention will be described with reference to the drawings.

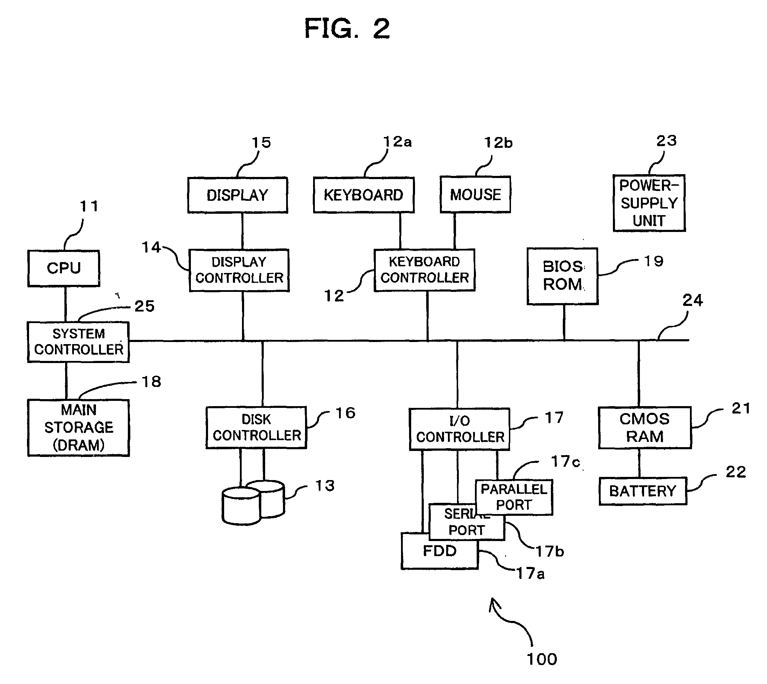

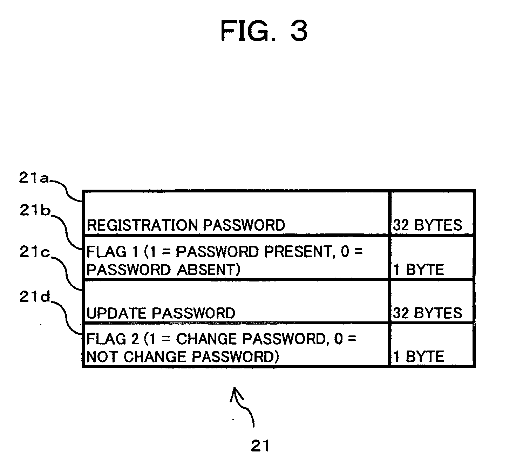

FIG. 2 is a block diagram showing a whole structure of this computer system. FIG. 3 is a diagram schematically showing a structure of a CMOS RAM in this computer system.

The computer system (for example, a personal computer) 100 according to this embodiment comprises, as shown in FIG. 2, a CPU (setting unit, restart processing unit) 11, a keyboard controller 12, a hard disk 13, a display controller 14, a display (for example, a CTR, LCD or the like) 15, a disk controller 16, an I/O controller 17, a main storage (DRAM) 18, a BIOS ROM 19, a bus 24, a system controller 25, a CMOS RAM (registration password storing unit, update password storing unit) 21 and a power-supply unit 23.

The hard disk 13 is a storage in the computer system 100, which has a password lock function of inhibiting an access to data on the hard disk 13 until a password beforehand registered (hereinafter referred as a registration password) is inputted.

The password lock function brings the hard disk 13 into a password lock status when the computer system 100 is started (when the power-supply is switched on) if a registration password is beforehand set in the hard disk 13, and inhibits an access to data stored on the hard disk 13 until an operator or the like inputs the registration password using a keyboard (input unit) 12a, a mouse 12b or the like, and releases the password lock status.

The hard disk 13 holds the registration password. Besides, the hard disk 13 collates a password inputted using the keyboard 12a or the mouse 12b with the registration password, and releases the password lock status and allows an access to data on the hard disk 13 only when the inputted password matches with the registration password.

Setting of enable/disable of the password lock of the hard disk 13 can be beforehand set by a BIOS setup program or the like. A password set in the hard disk 13 is set to an operation mode (hereinafter referred as a security freeze status) of inhibiting a process of, for example, changing the password relating to the hard disk unit after the environment setting process by the BIOS executed with a startup of the computer system 100 has been completed. After the OS is started, a registration password cannot be directly changed or deleted from an application or the like operating on the OS, for example.

According to this embodiment, the hard disk 13 may be internal in, or external to the computer system 100.

The CMOS RAM 21 reloadably stores BIOS setting information which is setting information on the system environment. The CMOS RAM 21 is battery-backed-up by a battery 22. When supply of the power from the power-supply unit 23 to the CMOS RAM 21 is stopped, the power is supplied from the battery 22 to the CMOS RAM 21.

In the CMOS RAM 21, there are formed a registration password storing region 21a, a registration password flag region 21b, an update password storing region 21c and an update password flag region 21d, as shown in FIG. 3.

In FIG. 3, examples of data capacities occupied by the registration password storing region 21a, the registration password flag region 21b, the update password storing region 21c and the update password flag regions 21d are shown next to these regions, respectively.

The registration password storing region 21a is a region for storing a registration password therein. The registration password storing region 21a is formed on the CMOS RAM 21 according to the maximum number of characters of the registration password (for example, not less than 32 bytes when a registration password composed of up to 32 half-sized characters is stored) .

A registration password stored in the registration password storing region 21a is password data inputted using the keyboard 12a or the mouse 12b when the computer system 100 (hard disk 13) is started in order to release the password lock status of the hard disk 13.

The registration password flag region 21b is a region for storing therein a flag (hereinafter referred as a flag 1, occasionally) indicating whether a registration password is inputted when the hard disk 13 is started, and the password lock status of the hard disk 13 is released. The registration password flag regions 21b uses a region of one byte. When the password lock status is released, "1" is set. When the password status is not released, "0" is set.

The update password storing region 21c is a region for storing an update password therein. Like the registration password storing region 21a, the update password storing regions 21c is formed on the CMOS RAM 21 according to the maximum number of characters of the update password (for example, not less than 32 bytes when an update password composed of up to 32 half-sized characters is stored).

The update password flag region 21d is a region for storing therein a flag (hereinafter referred as a flag 2, occasionally) indicating whether the registration password is going to be changed or not using the update password stored in the update password storing region 21d. The update password flag region 21d uses a region of one byte. When the registration password is going to be changed, "1" is set. When the registration password is not going to be changed, "0" is set.

Meanwhile, the flags (flag 1 and flag 2) stored in the registration password flag region 21b and the update password flag region 21d are not limited to the above examples, but may be modified in various ways without departing from the scope of this invention.

With the above registration password storing region 21a and the update password storing region 21c, the CMOS RAM 21 functions as the update password storing unit 20 for storing therein an update password, and also functions as the registration password storing unit 50, shown in FIG. 1.

The CPU 11 executes a program to perform various arithmetic processing and control processing. The CPU 11 executes a basic input/output program (hereinafter referred as a BIOS) read out from the BIOS ROM 19 to be described later, thereby operating to control various hardware (input/out unit and peripheral equipment) such as the keyboard 12a, the mouse 12b, the display 15, a floppy disk drive (FDD) 17a, the hard disk 13, etc. through the system controller 25.

In concrete, the system controller 25 controls the display 15 through the display controller 14, the keyboard 12a and the mouse 12b through the keyboard controller 12, the hard disk 13 through the disk controller 16, and the FDD 17a, a serial port 17b and a parallel port 17c through the I/O controller 17.

The CPU 11 executes the BIOS to perform the environment setting process executed with a startup of the computer system 100. After the OS is started, the CPU 11 executes various applications (for example, a password updating program and the like to be described later) to perform various processing.

The BIOS ROM 19 beforehand stores therein the BIOS (program) for controlling the system environment, which is configured with, for example, an EP-ROM (Erasable and Programmable-Read Only Memory).

The CPU 11 executes the BIOS read out from the BIOS ROM 19, refers to BIOS setting information stored in the CMOS RAM21, and controls the system environment.

The BIOS performs the environment setting process with a startup of the computer system 100. When the computer system 100 is started or restarted, the BIOS sets the system environment of the computer system 100 while referring to the BIOS setting information stored in the CMOS RAM 21.

The BIOS setting information is composed of various setting information on the system environment, which is a hardware environment such as setting (enable/disable, IRQ, etc.) of the serial port 17b, the parallel port 17c, a COM port (not shown), an internal modem (not shown), etc., and a software environment such as setting of date, time, a processing method at the time of occurrence of an error in POST (Power-On Self Test), power saving mode, etc., for example.

The BIOS has a BIOS setup program for editing BIOS setting information stored in the CMOS RAM 21. The CPU 11 executes the BIOS setup program, thereby editing the BIOS setting information stored in the CMOS RAM 21 on the basis of information inputted by operating the keyboard 12a by the operator.

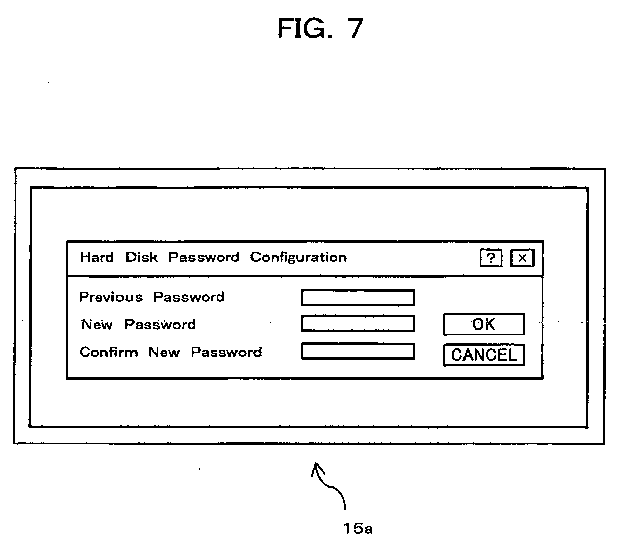

The setup function is of setting and changing environment setting items including operation parameters of the above-described various hardware, system date, etc. Upon setup by the BIOS, the setup function reads out the BIOS setting information from the CMOS RAM 21, outputs a display operation instruction to the display controller 14 to display the BIOS setting information on a display screen 15a (refer to FIGS. 7 and 8) of the display 15, and changes the BIOS setting information.

The BIOS includes, as one of the setup function, a program for making the CPU 11 execute a function of examining the flag 2 stored in the update password flag region 21d in the environment setting process, determining that a registration password is going to be changed when "1" is set at the flag 2, releasing the password lock status of the hard disk 13 using a password (a registration password before changed) inputted through the keyboard or the like by the operator, and setting an update password in the update password storing region 21c in the hard disk 13 to change the registration password stored in the registration password storing region 21a to the update password stored in the update password storing region 21c.

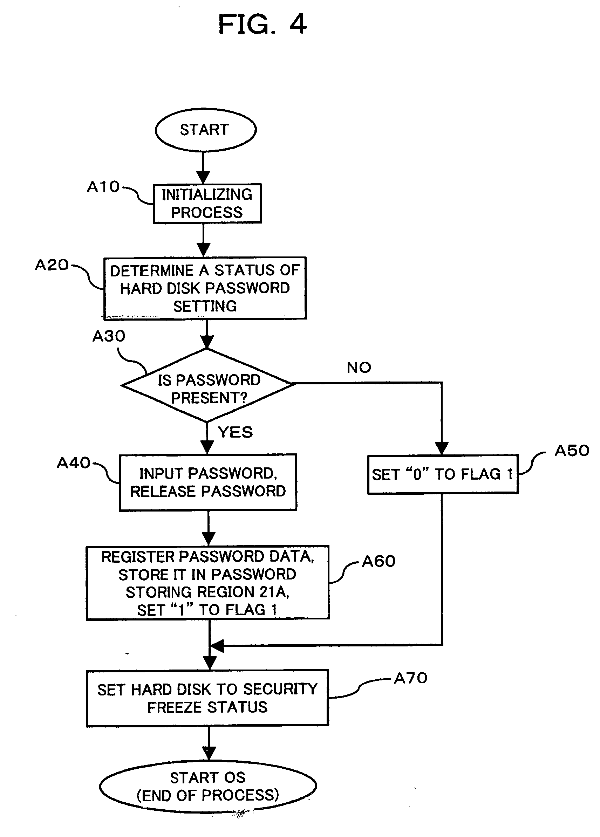

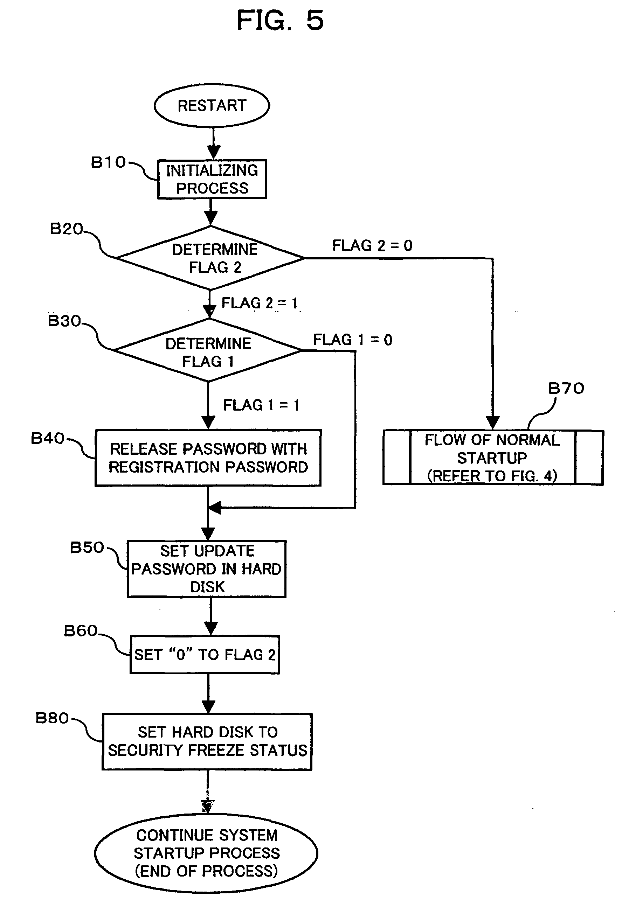

Next, description will be made of a process by the BIOS to be executed when this computer system is started, with reference to a flowchart (steps A10 through A70) shown in FIG. 4.

When the computer system 100 is started by switching on the power supply or the like, the BIOS performs a process of initializing each device on the basis of setting information on the system environment beforehand set in the CMOS RAM 21 or the like (step A10).

After that, the BIOS determines whether a registration password is set in the hard disk 13 (step A20). In concrete, the BIOS directly transmits a command to the hard disk 13 to examine whether a registration password is set (step A30).

When a registration password is set (refer to YES route of step A30), the BIOS displays a pop-up screen as shown in FIG. 8 on the display screen 15a of the display 15 to prompt the operator to input a password. When the inputted password matches with the registration password, the BIOS releases the password lock status of the hard disk 13 (step A40). When the inputted password does not match with the registration password, the BIOS does not release the password lock status.

Next, the BIOS stores the inputted password in the registration password storing region 21a, and sets "1" to the flag 1 in the registration password flag region 21b (step A60).

When no registration password is set (refer to NO route of step A30), the BIOS sets "0" to the flag 1 in the registration password flag region 21b (step A50).

After that, the BIOS sets an operation mode (security freeze status) of inhibiting a process of changing the password relating to the hard disk 13 (step A70), and starts a startup of the OS.

Next, description will be made of a process by the BIOS to be executed when this computer system 100 is restarted, with reference to a flowchart (steps B10 through B80) shown in FIG. 5.

When the computer system 100 is restarted, the BIOS performs a process of initializing each device on the basis of setting information on the system environment beforehand set in the CMOS RAM 21 or the like, and performs an operation of resetting the hard disk 13 to release the security freeze status (step B10).

After that, the BIOS examines the flag 2 stored in the update password flag region 21d to examine whether the registration password is going to be changed (step B20). When the flag 2 in the update password flag region 21d is "0" (refer to "flag 2 = 0" route of step B20), the BIOS performs a general startup process in which the password is not going to be changed as shown in the flowchart (steps A10 through A70) shown in FIG. 4 (step B70).

When the flag 2 in the update password flag region 21d is "1" (refer to "flag 2 = 1" route of step B20), the BIOS examines the flag 1 stored in the registration password flag region 21b. When "1" is stored at the flag 1 (refer to "flag 1 = 1" route of step B30), the BIOS releases the password lock status using the registration password stored in the registration password storing region 21a (step B40).

After that, the BIOS sets the update password stored in the update password storing region 21c in the hard disk 13. Besides, the BIOS changes the registration password stored in the registration password storing region 21a to the update password stored in the update password storing region 21c to set the update password stored in the update password storing region 21c as a new registration password (step B50).

When "0" is stored at the flag 1 (refer to "flag 1 = 0" route of step B30), the BIOS performs step B50.

The BIOS then sets "0" to the flag 2 in the update password flag region 21d (step B60). The BIOS sets the hard disk 13 to the security freeze status (step B80), then successively performs a process of starting-up the computer system 100 to start a startup of the OS.

In this embodiment, the process of resetting the hard disk 13 is performed in the initializing process at step B10. However, this is not limited to the above example, but the resetting process may be performed when the password of the hard disk 13 is released at step B40, forexample. This may be modified in various ways without departing from the scope of this invention.

The BIOS makes the CPU 11 perform a POST (Power-On Self Test) process of self-diagnosing the computer system 100 when the power supply of the computer system is switched on (at the time of a startup) or the computer system 100 is restarted. The BIOS (CPU 11) automatically checks all devices including the CPU 11, the hard disk 13, the FDD 17a, the DRAM 18, etc., and automatically checks the environment setting (setting of date/time, the serial port 17b, the parallel port 17c, the power saving mode, etc.) in the POST process.

The CPU 11 executes the BIOS to fulfil a function of setting the update password stored in the updated storing region 21c (update password storing unit 20 in FIG. 1) as a new registration password in the environment setting process executed with a re-startup of the computer system 100. The CPU 11 thus functions as the setting unit 40 shown in FIG. 1.

At the time of a restoring process, the CPU 11 also fulfils a function of releasing the password lock status of the hard disk 13 using the registration password before changed. The CPU 11 thus functions as the password lock releasing unit 41 shown in FIG. 1. After the password lock has been released, the CPU 11 also fulfils a function of changing the registration password stored in the registration password storing region 21a to the update password stored in the update password storing region 21a, thus functioning as the password changing unit 42 shown in FIG. 1.

On the hard disk 13 also stored is a password updating program, which is a program operating on the OS to prompt the user to input an update password to take the place of a registration password, and stores the update password inputted by the user in the update password storing region 21c.

FIG. 7 is a diagram showing an image of a pop-up screen displayed on the display screen when a registration password is changed in the computer system 100 according to the embodiment of this invention. The password updating program displays a pop-up screen as shown in FIG. 7 on the display screen 15a of the display 15 to make the user input an update password ("New Password" in FIG. 7) to take the place of a registration password ("Previous Password" in FIG. 7) together with the registration password before changed, and make the user again input the update password for confirmation ("Confirm New Password").

The password updating program calls the BIOS, and stores the inputted update password in the update password storing region 21c using a function of the BIOS. After that, the password updating program re-starts the computer system 100.

Namely, the password updating program functions as a program of storing an update password to taking the place of a registration password, which password has been inputted in a state in which the environment setting process executed with a startup of the computer system 100 has been complete, in the update password storing region 21c (update password storing unit 20 in FIG. 1, storing unit).

The CPU 11 executes the password updating program to fulfil a function of storing the update password inputted through the keyboard 12a, the mouse 12b or the like in the update password storing region 21a. The CPU 11 thus functions as the update password storing unit 20 shown in FIG. 1.

The CPU 11 executes the password updating program to also function as the restart processing unit for restarting the computer system 100 after an update password has been stored in the update password storing region 21c.

The DRAM 18 is used as a working area when the CPU 11 executes various arithmetic processing, in which the BIOS read out from the BIOS ROM 19 is stored, for example. In the DRAM 18, a registration password and an update password inputted through the keyboard 12a, the mouse 12b or the like are temporarily stored.

The power-supply unit 23 supplies power to each device of the computer system 100.

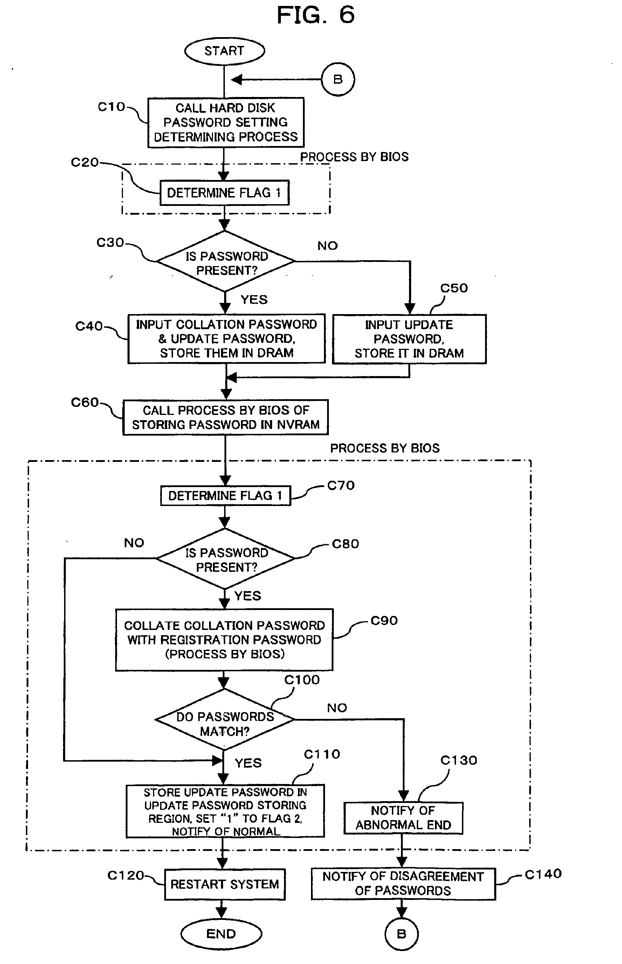

Next, controlling steps performed by the BIOS and the password updating program when a registration password in the hard disk 13 is changed in the computer system 100 in the above structure according to the embodiment of this invention will be described with reference to a flowchart (steps C10 through C140) shown in FIG. 6. In FIG. 6, processes performed by the BIOS are enclosed by a dot-dash line, whereas processes other than the processes enclosed by the dot-dash line are performed by the password updating program.

When a registration password in the hard disk 13 is changed, the user starts the above-described password updating program. The password updating program calls the BIOS to determine whether a hard disk password is set (step C10).

The BIOS examines the flag 1 stored in the registration password flag region 21b (step C20), and notifies the password updating program of a result of it.

The password updating program determines whether a registration password is set in the hard disk 13 on the basis of the notification from the BIOS (step C30). When a password is set in the hard disk 13 (refer to YES route at step C30), the password updating program displays the pop-up screen shown in FIG. 7 on the display screen 15a of the display 15 to request the operator to input a registration password before updated (collation password) set in the hard disk 13 and an update password to take the place of the registration password.

The password updating program stores a collation password and an update password inputted in the DRAM 18 (step C40).

When no password is set in the hard disk 13 (refer to NO route at step C30), the password updating program requests the user to input only an update password to be newly registered, and stores an inputted update password in the DRAM 18 (step C50).

The password updating program calls the BIOS in order to set the newly inputted update password as a new registration password (step C60).

The BIOS examines the flag 1 stored in the registration password flag region 21b (step C70) to determine whether a registration password is set in the hard disk 13 (step C80). When "0" is set at the flag 1, the BIOS determines that no registration password is set (refer to NO route at step C80), and stores an update password stored in the DRAM 18 in the update password storing region 21c in the DRAM 18. The BIOS also sets "1" to the flag 2 in the update password flag region 21d, then notifies the password updating program of normal end (step C110).

After that, the password updating program requests the OS to restart the computer system 100. A process of restarting the computer system 100 is performed by the function of the OS (step C120).

When "1" is set to the flag 1, the BIOS determines that a registration password is set (refer to YES route at step C80), and collates the inputted collation password stored in the DRAM 18 with the registration password stored in the registration password storing region 21a (step C90).

The BIOS determines whether the inputted collation password matches with the registration password stored in the registration password storing region 21a (step C100). When these collation passwords match (refer to YES route at step C100), the BIOS performs step C110.

When the inputted collation password does not match with the registration password stored in the registration password storing region 21a (refer to NO route at step C100), the BIOS terminates the process, and notifies the password updating program of abnormal end (step C130).

The password updating program, for example, displays on the display screen 15a of the display 15 that the inputted password (collation password) does not match with the registration password set in the hard disk 13, thereby notifying the user of it (step C140). The process then returns to step C10.

According to the computer system 100 of the embodiment of this invention, the operator can change a registration password using the password updating program having a GUI on the OS that the operator is accustomed to using when changing the registration password in the hard disk 13. It is therefore possible to improve the operability of the computer system 100. Additionally, since the BIOS called by the password updating program changes the registration password stored in the registration password storing region 21a to an update password stored in the update password storing region 21c, there is no possibility that the registration password is changed by an unauthorized access to the registration password by a computer virus or the like operating on the OS.

Generally, the specification of the BIOS differs from, for example, manufacturer to manufacturer, so that little computer virus exist which control the process performed by such the BIOS. In the computer system 100 of this invention, a registration password is changed to an update password using the function of the BIOS, which is very effective against an unauthorized access to a password by a computer virus.

In the above-described embodiment, a registration password, an update password, etc. are stored in the CMOS RAM 21 battery-backed-up by the battery 22. However, this invention is not limited to this example, but they may be stored in another NVRAM such as a flash memory or the like. This may be modified in various ways without departing from the scope of this invention.

In the above-described embodiment, the restart processing unit 30 (password updating program) restarts the computer system after an update password has been stored in the hard disk 13. However, this invention is not limited to this example. For example, the user may switch off the power supply as in the general operation after an update password has been stored in the hard disk 13. After the power supply of the computer system has been switched off, a registration password may be changed to the update password when the user starts the computer system by switching on the power supply.

Note that the present invention is not limited to the above examples, but may be modified in various ways without departing from the scope of the invention.

So long as each embodiment of this invention is disclosed, persons skilled in the art can manufacture this invention.

### Industrial Applicability

The password changing method and system, and a computer readable record medium in which a program is stored are useful when a registration password of an electronic equipment having a password lock function is changed, particularly, suited to change a password of a storage such as a hard disk or the like.

## Claims

1. A password changing method for changing a registration password in a computer system using an electronic equipment having a password lock function of inhibiting execution of a process until said registration password is inputted, comprising the steps of:
an inputting step of inputting an update password to take the place of said registration password in a state in which an environment setting process executed with a startup of said computer system has been completed;
a storing step of storing said update password in a storing unit; and
a setting step of setting said update password stored in said storing unit as a new registration password in the environment setting process executed with a startup of said computer system after said update password has been stored.

2. The password changing method according to claim 1, wherein said setting step comprises:
a step of releasing a password lock status of said electronic equipment using said registration password before updated; and
a step of changing said registration password to said update password stored in said storing unit after the password lock status of said electronic equipment has been released.

3. The password changing method according to claim 1, wherein said electronic equipment is a storage.

4. A computer system using an electronic equipment having a password lock function of inhibiting execution of a process until a registration password is inputted, comprising:
an input unit (10) for inputting an update password to take the place of said registration password in a state in which an environment setting process executed with a startup of said computer system has been completed;
an update password storing unit (20,21) for storing said update password therein; and
a setting unit (40,11) for setting said update password stored in said update password storing unit (20,21) as a new registration password in the environment setting process executed with a startup of said computer system after said update password has been stored.

5. The computer system according to claim 4 further comprising a registration password storing unit (50,21) for storing therein said registration password;
wherein said setting unit (40,11) comprises:
a password lock releasing unit (41,11) for releasing a password lock status of said electronic equipment using said registration password before changed; and
a password changing unit (42,11) for changing said registration password stored in said registration password storing unit (20,21) to said update password stored in said update password storing unit (20,21) after release by said password lock releasing unit (41,11) has been completed.

6. The computer system according to claim 4, wherein said electronic equipment is a storage.

7. The computer system according to claim 4, wherein said update password storing unit (20,21) is configured with a non-volatile storage.

8. A computer readable record medium storing therein a program for making a computer execute a process of changing a registration password in a computer system using an electronic equipment having a password lock function of inhibiting execution of a process until said registration password is inputted:
said program storing an update password, inputted in a state in which an environment setting process executed with a startup of said computer system has been completed, to take the place of said registration password in a storing unit, and setting said update password stored in said storing unit as a new registration password in the environment setting process executed with a startup of said computer system after said update password has been stored.

9. The computer readable record medium according to claim 8, wherein said program releases a password lock status of said electronic equipment using said registration password before changed when setting said update password as said new registration password, after that, changing said registration password to said update password stored in said storing unit.

10. A computer readable record medium storing therein a program for making a computer execute an environment setting process when a computer system using an electronic equipment having a password lock function of inhibiting execution of a process until a registration password is inputted is started:
said program determining whether an update password to take the place of said registration password is stored in a storing unit or not when the environment setting process is executed with a startup of said computer system, and setting said update password as a new registration password when it is determined that said update password is stored in said storing unit.

11. The computer readable record medium storing therein a program according to claim 10, wherein said program releases a password lock status of said electronic equipment using said registration password before changed when setting said update password as said new registration password, after that, changes said registration password to said update password stored in said storing unit.

12. The computer readable record medium storing therein a program according to claim 10, wherein said program is a BIOS.
